# EUROPEAN PATENT SPECIFICATION

(11) **EP 3 334 581 B1**
(45) Date of publication and mention of the grant of the patent: **04.11.2020**
(21) Application number: 16794030.3
(22) Date of filing: 15.09.2016
(51) Int. Cl.: B29C 33/02, B29C 33/36, B29C 33/40, A45D 40/16, B29C 35/02

(54) **MACHINE FOR PRODUCING COSMETIC OR MEDICINAL PRODUCTS, SUCH AS STICK PRODUCTS**
MASCHINE ZUR HERSTELLUNG KOSMETISCHER ODER MEDIZINISCHER PRODUKTE, WIE PRODUKTE IN STICKFORM
MACHINE DE PRODUCTION DE PRODUITS COSMÉTIQUES OU MÉDICAUX, TELS QUE DES PRODUITS EN BÂTON

(30) Priority: 18.09.2015 IT UB201570270 U
(43) Date of publication of application: 20.06.2018
(73) Proprietor: CMI Engineering S.r.l., 20123 Milano (IT)
(72) Inventor: COMOLI, Franco, 28050 Pombia (NO) (IT)
(74) Representative: Di Gennaro, Sergio
(86) International application number: PCT/IB2016/055499
(87) International publication number: WO 2017/046733

(56) References cited:
- US-A- 4 634 368
- Zhao Jasily: "Silicon mold lipstick filling and packing line", , 21 June 2013 (2013-06-21), XP055331905, Retrieved from the Internet: URL:https://www.youtube.com/watch?v=D-XdPK tpkmg [retrieved on 2017-01-03]

## Description

### Field of the innovation

The present innovation concerns a machine for producing cosmetic or medicinal products, such as stick products, like for example lipsticks, lip glosses or packs of lip balm.

### State of the art

In order to produce lipsticks or lip balm sticks forming machines of the turntable type are currently known. A plurality of moulds of silicone material, per se known and in the jargon called "ogive" are fixed and moved on the turntable or carousel of these machines.

By rotating the carousel about a vertical axis it moves the silicone moulds from a pouring station to a de-moulding station and vice-versa.
The current technological choice is making turntables of relatively small size, and of diameter practically never greater than **0.6-1.2** metres, and to rotate the turntable as fast as possible to ensure the required production rates. This practically makes it necessary to complete the cooling and heating cycles of each ogive within **1.5-2** minutes at most.

Again in order to be able to achieve satisfactory production rates, in this type of known machines the nozzles of the station that pours the lipstick, the molten lip balm or more generally the fluid material to be formed into the moulds, deliberately are not enclosed by any case or shell that thermally insulates them from the environment outside of the forming machine, so as to accelerate the cooling and the solidification of the molten product. Again to cool the poured product more quickly, the ogives are cooled in environments between **-15/-20°**C**.**

However, this causes the lipstick or lip balm to cool down too quickly in the silicone moulds, crystallize on the surface thereof forming deposits that stiffen the moulds themselves, making it necessary to replace them after a certain number of pouring cycles. These crystallized deposits also form a thermal barrier that slows down the cooling of the mass of lipstick or lip balm, creating shrinkage cavities in the cooled stick. When the so-called "cases" ("macchinette" in the Italian technical jargon), i.e. the plastic case that must enclose the stick, is slotted onto the stick, the stick frequently breaks.

Since silicone is a highly thermally insulating material, infrared heating lamps are not a solution for quickly heating ogives in a rotary machine: indeed, the lamps would only heat the outer surface of the ogive but not the surface of the inner pouring cavity. Equally, silicone greatly limits the cooling speed of the ogives in the travel between the pouring station and the extraction station, contributing to limiting the production capacity of the machine.

The author of the present innovation considers that the costs of replacing the silicone moulds is unduly high, and a purpose of the present innovation is to provide a machine and a process for pouring consumable products, like for example lipsticks, packs of lip balm or other cosmetic or medicinal products, which is an improvement with respect to known machines relative to the deterioration of the pouring moulds and to the frequency with which they have to be replaced.

### Summary of the innovation

Such a purpose is accomplished, according to the present innovation, with a machine for producing cosmetic or medicinal products having the characteristics according to claim **1.**

The patent application DE2352175 discloses a machine for producing cosmetic products such as stick products, comprising:
- a plurality of moulds;
- a pouring station arranged for pouring fluid material into each of the moulds;
- a de-moulding station arranged for extracting the solidified content from the moulds ;
- a continuous conveyor arranged for conveying the plurality of moulds from the pouring station to the de-moulding station and/or vice-versa;
wherein the continuous conveyor is arranged for moving the plurality of moulds along a non-circular path.

The patent US4634368 discloses a machine for cooling moulded lipsticks comprising, a plurality of contrainers and a continuous conveyor arranged for conveying the plurality of containers, wherein the continuous conveyor is arranged for moving the plurality of containers along a non-circular path.

US**4634368** does not discloses an apparatus provided with a pouring station arranged for pouring fluid material into each of the containers, or with a de-moulding station arranged for extracting the solidified content from the containers.

Further characteristics of the device are the object of the dependent claims. XP055331905 discloses a machine for producing cosmetic comprising:-a plurality of moulds ;-a pouring station arranged for pouring fluid material into each of the moulds;-a de-moulding station arranged for extracting the solidified content from the moulds ;-a continuous conveyor arranged for conveying the plurality of moulds from the pouring station to the de-moulding station and/or vice-versa.

The advantages that can be obtained with the present innovation will become clearer to the person skilled in the art from the following detailed description of a particular non-limiting embodiment, illustrated with reference to the following schematic figures.

### List of Figures

Figure **1** shows an overall perspective view of a machine for producing cosmetic or medicinal products, such as stick products, according to a particular embodiment of the innovation;
Figure **2** shows a detail of the front view of the machine of Figure **1,** according to the direction of observation Y;
Figure **3** shows a detail of a first cross section of the processing case and of the pouring station of the machine of Figure **1,** in a section plane perpendicular to the direction of forward motion of the continuous conveyor;
Figure **3**A shows a perspective view of a detail of the moulds and of the continuous conveyor that moves them in the machine of Figure **1;**
Figure **4** shows a detail of a second cross section of the processing case of the machine of Figure **1,** in a section plane perpendicular to the direction of forward motion of the continuous conveyor;
Figure **5** shows the perspective view of a portion of the tunnel of the machine of Figure **1,** after having removed part of the cover of the tunnel itself;
Figure **6** shows the perspective view, partially in section, of the pouring station of Figure **3.**

### Detailed description

Figures **1-6** are relative to a machine for producing consumable products, like for example cosmetic or medicinal sticks, according to a particular embodiment of the innovation, indicated with the overall reference numeral **1** and comprising:
- a plurality of moulds **3,** preferably made of silicone material;
- a pouring station **5** arranged for pouring fluid material into each of the moulds **3** (Figures **3, 6**);
- a de-moulding station, not shown, arranged for extracting the solidified content from the moulds **3;**
- a continuous conveyor **7** arranged for conveying the plurality of moulds **3** from the pouring station to the de-moulding station and/or vice-versa (Figures **2, 3**A, **5**).

At least part of the moulds **3,** and preferably all of them, are arranged for giving a substantially cylindrical, rod-, bar-, cone-, ogive- or stick-shape to the fluid material contained in the moulds 3 themselves.

The continuous conveyor **7** can for example comprise a plurality of carriages or sliding blocks **9** and possibly a guide **10** along which such carriages or sliding blocks slide, where each carriage or sliding block is arranged for conveying at least one mould **3.** The assembly of carriages or sliding blocks can be pulled for example by a chain.

According to an aspect of the innovation, in the machine **1** the continuous conveyor is arranged for moving the plurality of moulds **3** along a substantially non-circular path, and preferably closed on itself in a loop.

As shown in Figure **1,** the continuous conveyor **7** is arranged for moving the plurality of moulds **3** along a path having an overall substantially oblong shape, approximately rectangular or obround. In other embodiments that are not shown, however, the continuous conveyor can move the moulds **3** along a path having an overall shape that for example is variously lobed, oval, arched, L-shaped, T-shaped, polygonal, elliptical.

Advantageously, the machine **1** is provided with a processing case **11** that encloses the plurality of moulds **3** while they are moved by the continuous conveyor **7** and while they are filled in the pouring station **5.**
The processing case **11** also encloses at least part of the continuous conveyor **7.**

Figure **4** shows a section of the processing case **11** according to a section plane transversal to the direction of forward motion of the moulds **3:** as can be seen from the Figure, the processing case **11** can be more or less box-shaped and can substantially form a tunnel.

The processing case **11** advantageously has the function of insulating the moulds **3** from the environment outside of the machine **1,** keeping them hotter in their path from the de-moulding station to the pouring station and colder from the pouring station to the de-moulding station. Indeed, advantageously, in the section of the case **11** that extends from the de-moulding station to the pouring station hot air is introduced, or in any case heating elements are present, like for example infrared lamps or other radiators, which make the heating of the moulds **3** more gradual, and in the section of the case **11** that extends from the pouring station to the de-moulding station cold air is advantageously injected, or in any case cooling elements are present that make the cooling of the moulds more gradual.

Again in order to make the heating and the cooling of the moulds more gradual, the machine **1** is provided with a plurality of walls or in any case thermal separation barriers arranged for thermally insulating from one another a plurality of sections **111, 113, 115** of the path followed by the moulds **3,** moved by the conveyor (Figure **1**). In the embodiment of Figure **1** the sections **111, 113, 115** are in the section of path that goes from the extraction station to the pouring station **5,** and along the section of path that extends from the pouring station **5** to the extraction station, three further sections can be provided separated by walls or in any case by thermal separation barriers: the temperature of each section **111, 113, 115** can be controlled setting a reference or target temperature that is different and gradually increasing or decreasing, respectively, depending on whether the pouring station **5** is being approached or moved away from.

For this purpose, advantageously, the machine **1** is provided with a heating system arranged for heat the moulds **3** or keep them at a temperature substantially higher - even by many degrees - than that outside of the machine **1** itself, while the moulds are conveyed from the de-moulding station to the pouring station **5.**

Again for this purpose, advantageously, the machine **1** is provided with a cooling system arranged for bringing or keeping the moulds **3** at a temperature substantially below that which they are at or which exists at the pouring station **5,** while such moulds **3** are conveyed from the pouring station towards the de-moulding station.

Advantageously, the cooling system is arranged for cooling the ogives **3** causing them be licked by a flow of refrigerated air, preferably to a temperature not below -**7**°C, and more preferably not below -**5°**C, and even more preferably not below -**2**°C. For this purpose, the cooling system can comprise one or more fans to generate such a flow.

Advantageously, the cooling system is arranged for cooling the three sections **111, 113, 115** to different temperatures, for example the intermediate section **113** to a higher temperature than that of the adjacent sections **111, 115** so as to avoid the crystallization of the silicone and eliminate latent heat.

The pouring station is provided with one or more pouring nozzles **50** through which the lipstick, the lip balm or other fluid material is poured into the cavities of the moulds **3.**

Advantageously, each pouring nozzle **50** is arranged for inserting into the processing case **11** keeping its end inside it during the pouring of the material into the mould, so as to reduce the thermal shocks in the poured material and in the moulds **3.** Again for this purpose, at the pouring station the case **11** is provided with suitable openings for the entry of the nozzles **50,** said openings preferably being closed by suitable membranes or valves that allow the nozzles **50** to pass, but making a seal against them, increasing the thermal insulation of the ogives **3** and of the nozzles **50** during pouring.

This provision also contributes to reducing the formation of deposits of crystallized material on the inner walls of the moulds **3.** In order to facilitate the penetration of the nozzles **50** in the case **11,** the nozzles have an elongated shape, indicatively like a slender rod as shown in Figure **3.**

Advantageously, the continuous conveyor **7** is arranged for conveying each mould **3** from the pouring station **5** to the de-moulding station or vice-versa in a transit time equal to or longer than three minutes, more advantageously equal to or longer than four minutes and even more advantageously equal to or longer than eight minutes, allowing the moulds to heat up and cool down gradually and sufficiently slowly in the processing case **11.**

Sufficiently long cooling or heating times of the moulds **3** make it possible to cool or heat with sufficient uniformity, using a flow of air, not only the outside but the entire mass of the moulds **3,** and in particular their inner pouring cavity, avoiding or in any case substantially reducing the formation of shrinkage cavities in the sticks poured into the moulds, and of the aforementioned crystallized deposits of lipstick or lip balm crystallized on the inner surface of the moulds **3,** which thus have a much longer operating life. Moreover, the conveyor belt allows the machine **1** to achieve much higher production rates with respect to known machines using a turntable, as is clear from the following Table

| **Type of machine** | **Number of ogives** | **Diameter of the turntable [mm]** | **Production rate [pieces/hour]** |
|---|---|---|---|
| known turntable | **90** | **600** | **600-800** |
| known turntable | **160** | | **1200** |
| known turntable | **220** | **1200** | **1500** |
| linear according to the invention | **120-380** ogives | not applicable | **2000-2200** |

During normal operation, the continuous conveyor **7** moves the moulds containing the material poured from the pouring station **5** to the de-moulding station, and the moulds emptied from the de-moulding station to the pouring station. At the de-moulding station there can be a system that slots the cups ("macchinette" in Italian jargon), or other type of case or package in which the stick of lipstick or of lip balm must be inserted, over the sticks now solidified and formed.

The embodiments described above can undergo different modifications and variations without departing from the scope of protection of the present innovation.
For example, the moulds - or "ogives"- **3** can be made not only of silicone but also of a more generic elastomeric or rubbery material, or of a material having elastic modulus equal to or less than **0,7** GPa, more preferably equal to or less than **0,5** GPa and even more preferably equal to or less than **0,1** GPa.

Moreover, all of the details can be replaced by technically equivalent elements. For example, the materials used, as well as the sizes, can be whatever according to the technical requirements. It should be understood that an expression of the type "A *comprises* B, C, D" or "A *is formed from* B, C, D" also comprises and describes the particular case in which "A *consists of* B, C, D". The examples and lists of possible variants of the present application should be taken as non-exhaustive lists.

## Claims

1. Machine (**1**) for producing cosmetic or medicinal products such as stick products, comprising:
- a plurality of moulds (**3**);
- a pouring station (**5**) arranged for pouring fluid material into each of the moulds;
- a de-moulding station arranged for extracting the solidified content from the moulds (**3**);
- a continuous conveyor (**7**) arranged for conveying the plurality of moulds from the pouring station (**5**) to the de-moulding station and/or vice-versa;
- a heating system arranged for heating the moulds (**3**) or keep them at a temperature greater than that outside of the machine (**1**) itself, while such moulds are conveyed from the de-moulding station to or towards the pouring station (**5**);
- a cooling system arranged for bringing or keeping the moulds at a temperature lower than the temperature which they have or the temperature existing at the pouring station, while such moulds are conveyed from the pouring station towards the demoulding station;
wherein:
- the continuous conveyor (**7**) is arranged for moving the plurality of moulds (**3**) along a non-circular path;
- at least part of the moulds (**3**) are made of a material selected from the following group: an elastomeric or rubbery material, a silicone-based material; and further comprising a plurality of thermal separation walls arranged for thermally insulating from one another a plurality of sections of the path followed by the molds moved by the conveyor.

2. Machine (**1**) according to claim **1,** wherein the continuous conveyor (**7**) is arranged for moving the plurality of moulds (**3**) along a path substantially having an overall shape selected from the following group: oblong, lobed, rectangular, oval, arched, L-shaped, T-shaped, polygonal, elliptical.

3. Machine (**1**) according to one or more of the previous claims, wherein the continuous conveyor (**7**) comprises a plurality of carriages or sliding blocks and possibly a guide along which such carriages or sliding blocks slide, where each carriage or sliding block is arranged for conveying at least one mould (**3**).

4. Machine (**1**) according to one or more of the previous claims, comprising a processing case (**11**) containing the plurality of moulds (**3**) while they are moved by the continuous conveyor (**7**) and while they are filled in the pouring station (**5**).

5. Machine (**1**) according to one or more of the previous claims, wherein the continuous conveyor (**7**) is arranged for conveying each mould (**3**) from the pouring station (**5**) to the demoulding station in a transit time equal to or longer than three minutes.

6. Machine according to one or more of the previous claims, wherein the continuous conveyor (**7**) is arranged for conveying each mould (**3**) from the pouring station (**5**) to the demoulding station in a transit time equal to or longer than eight minutes.

7. Machine according to one or more of the previous claims, wherein at least part of the moulds are arranged for giving the fluid material that they receive a shape substantially like a cylinder, a rod, a bar, a cone, an ogive or a stick.

8. Machine according to one or more of the previous claims, comprising at least two thermal separation walls arranged for thermally insulating at least three sections **(111, 113, 115)** of the path followed by the moulds between the pouring and de-moulding stations moved by the conveyor from one another.

9. Machine according to claim **1,** wherein the heating system is arranged for dispensing hot air or another substantially hot aeriform fluid that heats the moulds (**3**) moved from the de-moulding station to the pouring station (**5**).

10. Machine according to claim **1,** wherein the heating system comprises one or more heating elements, like for example infrared lamps or other radiators, arranged in the section of the case (**11**) that extends from the de-moulding station to the pouring station (**5**), where the heating elements are arranged for heating the moulds (**3**) moved from the de-moulding station to the pouring station (**5**).

11. Machine according to claim **1,** wherein the cooling system is arranged for dispensing cold air or another substantially cold aeriform fluid that cools the moulds (**3**) moved from the pouring station (**5**) to the de-moulding station.

12. Machine according to one or more of the previous claims, wherein the moulds (**3**) are arranged for forming sticks of cosmetic or medicinal products like for example lipsticks, lip gloss, packs of lip balm, deodorants, disinfectants, insect repellents, products for protecting the skin from solar radiation, tanning products, hydrating products.

13. Machine according to one or more of the previous claims, wherein the substantially non-circular path of the continuous conveyor (**7**) is closed on itself in a loop.

## Patentansprüche

1. Maschine (1) zur Herstellung von kosmetischen oder medizinischen Produkten wie Stabprodukten, umfassend:
- eine Vielzahl von Formen (3);
- eine Gießstation (5) angeordnet zum Gießen von flüssigem Material in jede der Formen;
- eine Entformungsstation zum Extrahieren des erstarrten Inhalts aus den Formen (3);
- ein kontinuierlicher Förderer (7), der zum Fördern der mehreren Formen von der Gießstation (5) zur Entformungsstation und / oder umgekehrt angeordnet ist;
- ein Heizsystem zum Erhitzen der Formen (3) oder zum Halten auf einer Temperatur, die höher als die außerhalb der Maschine (1) selbst ist, während solche Formen von der Entformungsstation zur oder zur Gießstation (5) befördert werden.
- ein Kühlsystem, das angeordnet ist, um die Formen auf eine Temperatur zu bringen oder zu halten, die niedriger ist als die Temperatur, die sie haben, oder die Temperatur, die an der Gießstation herrscht, während solche Formen von der Gießstation zur Entformungsstation befördert werden;
worin:
- der kontinuierliche Förderer (7) ist angeordnet, um die mehreren Formen (3) entlang einer nicht kreisförmigen Bahn zu bewegen;
- Mindestens ein Teil der Formen (3) besteht aus einem Material, das aus der folgenden Gruppe ausgewählt ist: einem elastomeren oder gummiartigen Material, einem Material auf Silikonbasis; und ferner mehrere thermische Trennwände umfassen, die zum thermischen Isolieren voneinander mehrere Abschnitte des Weges angeordnet sind, gefolgt von den Formen, die von dem Förderer bewegt werden.

2. Maschine (1) nach Anspruch 1, wobei der kontinuierliche Förderer (7) zum Bewegen der mehreren Formen (3) entlang eines Weges angeordnet ist, der im wesentlichen eine Gesamtform aufweist, die aus der folgenden Gruppe ausgewählt ist: länglich, gelappt, rechteckig, oval , gewölbt, L-förmig, T-förmig, polygonal, elliptisch.

3. Maschine (1) nach einem oder mehreren der vorhergehenden Ansprüche, wobei der kontinuierliche Förderer (7) mehrere Wagen oder Gleitblöcke und möglicherweise eine Führung umfasst, entlang derer solche Wagen oder Gleitblöcke gleiten, wobei jeder Wagen oder Gleitblock ist zum Fördern mindestens einer Form (3) angeordnet.

4. Maschine (1) nach einem oder mehreren der vorhergehenden Ansprüche, umfassend einen Verarbeitungsfall (11), der die mehreren Formen (3) enthält, während sie durch den kontinuierlichen Förderer (7) bewegt werden und während sie in das Gießen gefüllt werden Station (5).

5. Maschine (1) nach einem oder mehreren der vorhergehenden Ansprüche, wobei der kontinuierliche Förderer (7) zum Fördern jeder Form (3) von der Gießstation (5) zur Entformungsstation in einer Laufzeit gleich oder gleich angeordnet ist länger als drei Minuten.

6. Maschine nach einem oder mehreren der vorhergehenden Ansprüche, wobei der kontinuierliche Förderer (7) zum Fördern jeder Form (3) von der Gießstation (5) zur Entformungsstation in einer Transitzeit von mindestens acht angeordnet ist Protokoll.

7. Maschine nach einem oder mehreren der vorhergehenden Ansprüche, wobei mindestens ein Teil der Formen so angeordnet ist, dass das Fluidmaterial eine Form erhält, die im Wesentlichen einem Zylinder, einer Stange, einer Stange, einem Kegel, einem Ogiv oder einem Stock.

8. Maschine nach einem oder mehreren der vorhergehenden Ansprüche, umfassend mindestens zwei Wärmetrennwände, die zum Wärmeisolieren von mindestens drei Abschnitten (111, 113, 115) des Weges angeordnet sind, gefolgt von den Formen zwischen den Gieß- und Entformungsstationen durch das Förderband voneinander bewegt.

9. Maschine nach Anspruch 1, wobei das Heizsystem zum Abgeben von heißer Luft oder einer anderen im Wesentlichen heißen aeriformen Flüssigkeit angeordnet ist, die die Formen (3) erwärmt, die von der Entformungsstation zur Gießstation (5) bewegt werden.

10. Maschine nach Anspruch 1, wobei das Heizsystem ein oder mehrere Heizelemente umfasst, wie beispielsweise Infrarotlampen oder andere Heizkörper, die in dem Abschnitt des Gehäuses (11) angeordnet sind, der sich von der Entformungsstation zur Gießstation erstreckt (5), wo die Heizelemente zum Erhitzen der Formen (3) angeordnet sind, die von der Entformungsstation zur Gießstation (5) bewegt werden.

11. Maschine nach Anspruch 1, wobei das Kühlsystem zum Abgeben von kalter Luft oder einer anderen im wesentlichen kalten aeriformen Flüssigkeit angeordnet ist, die die Formen (3) kühlt, die von der Gießstation (5) zur Entformungsstation bewegt werden.

12. Maschine nach einem oder mehreren der vorhergehenden Ansprüche, wobei die Formen (3) zum Bilden von Stiften aus kosmetischen oder medizinischen Produkten wie beispielsweise Lippenstiften, Lipgloss, Packungen mit Lippenbalsam, Deodorants, Desinfektionsmitteln, Insektenschutzmitteln, Produkten angeordnet sind zum Schutz der Haut vor Sonneneinstrahlung, Bräunungsprodukten, feuchtigkeitsspendenden Produkten.

13. Maschine nach einem oder mehreren der vorhergehenden Ansprüche, wobei der im wesentlichen nicht kreisförmige Weg des kontinuierlichen Förderers (7) in einer Schleife auf sich selbst geschlossen ist.

## Revendications

1. Machine (1) pour produire des produits cosmétiques ou médicinaux tels que des produits en bâtonnets, comprenant:
- une pluralité de moules (3);
- un poste de versement (5) agencé pour verser de la matière fluide dans chacun des moules;
- un poste de démoulage agencé pour extraire le contenu solidifié des moules (3);
- un transporteur continu (7) agencé pour transporter la pluralité de moules du poste de coulée (5) au poste de démoulage et / ou vice-versa;
- un système de chauffage agencé pour chauffer les moules (3) ou les maintenir à une température supérieure à celle à l'extérieur de la machine (1) elle-même, tandis que ces moules sont acheminés du poste de démoulage vers ou vers le poste de coulée (5) ;
- un système de refroidissement agencé pour amener ou maintenir les moules à une température inférieure à la température qu'ils ont ou à la température existant au poste de coulée, tandis que de tels moules sont acheminés du poste de coulée vers le poste de démoulage;
où:
- le transporteur continu (7) est agencé pour déplacer la pluralité de moules (3) le long d'un trajet non circulaire;
- au moins une partie des moules (3) sont en un matériau choisi dans le groupe suivant: un matériau élastomère ou caoutchouteux, un matériau à base de silicone; et comprenant en outre une pluralité de parois de séparation thermique agencées pour isoler thermiquement les unes des autres une pluralité de sections du trajet suivies par les moules déplacés par le convoyeur.

2. Machine (1) selon la revendication 1, dans laquelle le convoyeur continu (7) est agencé pour déplacer la pluralité de moules (3) le long d'un trajet ayant sensiblement une forme globale choisie dans le groupe suivant: oblong, lobé, rectangulaire, ovale , cintré, en forme de L, en forme de T, polygonal, elliptique.

3. Machine (1) selon une ou plusieurs des revendications précédentes, dans laquelle le convoyeur continu (7) comprend une pluralité de chariots ou blocs coulissants et éventuellement un guide le long duquel coulissent de tels chariots ou blocs coulissants, où chaque chariot ou bloc coulissant est agencé pour transporter au moins un moule (3) .

4. Machine (1) selon une ou plusieurs des revendications précédentes, comprenant un boîtier de traitement (11) contenant la pluralité de moules (3) pendant qu'ils sont déplacés par le convoyeur continu (7) et pendant qu'ils sont remplis dans la coulée station (5).

5. Machine (1) selon une ou plusieurs des revendications précédentes, dans laquelle le convoyeur continu (7) est agencé pour transporter chaque moule (3) du poste de coulée (5) au poste de démoulage dans un temps de transit égal ou plus de trois minutes.

6. Machine selon une ou plusieurs des revendications précédentes, dans laquelle le convoyeur continu (7) est agencé pour transporter chaque moule (3) du poste de coulée (5) au poste de démoulage dans un temps de transit égal ou supérieur à huit minutes.

7. Machine selon une ou plusieurs des revendications précédentes, dans laquelle au moins une partie des moules sont agencés pour donner au matériau fluide qu'ils reçoivent une forme sensiblement semblable à un cylindre, une tige, une barre, un cône, une ogive ou un bâton.

8. Machine selon une ou plusieurs des revendications précédentes, comprenant au moins deux parois de séparation thermique agencées pour isoler thermiquement au moins trois tronçons (111, 113, 115) du chemin suivi par les moules entre les postes de coulée et de démoulage déplacés par le convoyeur l'un de l'autre.

9. Machine selon la revendication 1, dans laquelle le système de chauffage est agencé pour distribuer de l'air chaud ou un autre fluide aériforme sensiblement chaud qui chauffe les moules (3) déplacés du poste de démoulage au poste de coulée (5).

10. Machine selon la revendication 1, dans laquelle le système de chauffage comprend un ou plusieurs éléments chauffants, comme par exemple des lampes infrarouges ou d'autres radiateurs, disposés dans la section du boîtier (11) qui s'étend du poste de démoulage au poste de coulée. (5), où les éléments chauffants sont agencés pour chauffer les moules (3) déplacés du poste de démoulage au poste de coulée (5).

11. Machine selon la revendication 1, dans laquelle le système de refroidissement est agencé pour distribuer de l'air froid ou un autre fluide aériforme sensiblement froid qui refroidit les moules (3) déplacés du poste de coulée (5) au poste de démoulage.

12. Machine selon une ou plusieurs des revendications précédentes, dans laquelle les moules (3) sont agencés pour former des sticks de produits cosmétiques ou médicinaux comme par exemple des rouges à lèvres, des gloss, des packs de baume à lèvres, des déodorants, des désinfectants, des insectifuges, des produits pour protéger la peau du rayonnement solaire, des produits de bronzage, des produits hydratants.

13. Machine selon une ou plusieurs des revendications précédentes, dans laquelle le chemin sensiblement non circulaire du convoyeur continu (7) est fermé sur lui-même en boucle.
